(19) Europäisches Patentamt
European Patent Office
Office européen des brevets

(11) Veröffentlichungsnummer: **0 054 147**
**B1**

(12) **EUROPÄISCHE PATENTSCHRIFT**

(45) Veröffentlichungstag der Patentschrift: **12.10.83**

(51) Int. Cl.³: **A 01 N 43/48**, A 01 N 43/72, C 07 D 403/02, C 07 D 417/02

(21) Anmeldenummer: **81108807.9**

(22) Anmeldetag: **23.10.81**

# (54) Isatogenderivate, Verfahren zu ihrer Herstellung und ihre Verwendung als Fungizide.

(30) Priorität: **16.12.80 DE 3047388**

(43) Veröffentlichungstag der Anmeldung: **23.06.82 Patentblatt 82/25**

(45) Bekanntmachung des Hinweises auf die Patenterteilung: **12.10.83 Patentblatt 83/41**

(84) Benannte Vertragsstaaten: **AT CH DE FR GB LI**

(56) Entgegenhaltungen:

**DE-A-2 504 252**

**JOURNAL OF HETEROCYCLIC CHEMISTRY, Band 10, Dezember 1973, NEW YORK (US) J.D. ALBRIGHT et al.: "Reactions of 1,2-Dimethyl-5-nitroimidazole. Novel Methods of Conversion of the 2-Methyl Group to a Nitrile", Seiten 899–907**

(73) Patentinhaber: **BASF Aktiengesellschaft, Carl-Bosch-Strasse 38, D-6700 Ludwigshafen (DE)**

(72) Erfinder: **Hagen, Helmut, Dr., Max-Slevogt-Strasse 17E, D-6710 Frankenthal (DE)**
Erfinder: **Kohler, Rolf-Dieter, Dr., Amselweg 3, D-6803 Edingen (DE)**
Erfinder: **Pommer, Ernst-Heinrich, Dr., Berliner Platz 7, D-6703 Limburgerhof (DE)**

**EP 0 054 147 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Isatogenderivate, Verfahren zu ihrer Herstellung und ihre Verwendung als Fungizide

Die vorliegende Erfindung betrifft neue Isatogenderivate, ein Verfahren zu ihrer Herstellung, Fungizide, die diese Verbindungen als Wirkstoffe enthalten, sowie ein Verfahren zur Bekämpfung von Pilzen mit diesen Verbindungen.

Als heteroarylsubstituiertes Isatogen wurde lediglich 2-Pyridyl-isatogen beschrieben, für das jedoch keine Anwendungsmöglichkeit bekannt ist (Advances in Heterocyclic Chemistry 22, 123 ff (1978)).

Es wurde gefunden, dass Isatogenderivate der Formel

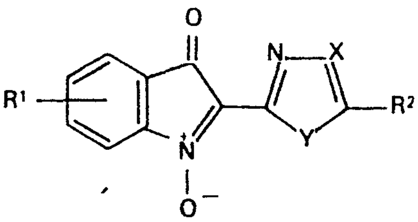

(I),

in der

$R^1$ Wasserstoff, Halogen oder einen Alkyl- oder Alkoxyrest mit bis zu 6 Kohlenstoffatomen,

$R^2$ Wasserstoff, Nitro, einen Alkylrest mit bis zu 6 Kohlenstoffatomen oder einen Rest der Formel

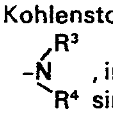

, in der $R^3$ und $R^4$ gleich oder verschieden sind und für Alkyl mit bis zu 6 Kohlenstoffatomen stehen oder zusammen eine gegebenenfalls durch Sauerstoff unterbrochene Alkylengruppe mit 4 oder 5 Kohlenstoffatomen bilden,

X Kohlenstoff oder Stickstoff und

Y Sauerstoff, Schwefel oder einen Rest der Formel $-NR^5-$, wobei $R^5$ für Alkyl mit bis zu 6 Kohlenstoffatomen steht, bedeuten oder

$R^2$ zusammen mit dem Kohlenstoff, dessen Substituent $R^2$ ist, und mit X einen fünf- oder sechsgliedrigen aromatischen Ring bildet,

Pilze der Art Septoria wirkungsvoll bekämpfen.

$R^1$ in Formel I kann für Wasserstoff, für einen verzweigten oder unverzweigten Alkylrest mit bis zu 6, vorzugsweise mit bis zu 4 Kohlenstoffatomen, wie Methyl, Ethyl, einen Propyl-, Butyl-, Pentyl- oder Hexylrest, für einen verzweigten oder unverzweigten Alkoxyrest mit bis zu 6, vorzugsweise mit bis zu 4 Kohlenstoffatomen, wie Methoxy, Ethoxy, n-Propyloxy, Isopropyloxy, sec-Butyloxy, Isobutyloxy, tert.-Butyloxy, 3-Methyl-n-butoxy, 2-Methyl-n-butyloxy, 4-Methyl-n-pentyloxy, 4-Ethyl-n-butyloxy oder Neopentyloxy stehen. $R^1$ kann auch Halogen, wie Fluor, Chlor oder Brom, bedeuten.

$R^2$ in Formel I bedeutet Wasserstoff, Nitro, einen verzweigten oder unverzweigten Alkylrest mit bis zu 6, vorzugsweise mit bis zu 4 Kohlenstoffatomen, wie Methyl, Ethyl, einen Propyl-, Butyl-, Pentyl-, Hexylrest oder einen Rest der Formel

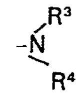

, in der $R^3$ und $R^4$ gleich oder verschieden sind und für Alkyl mit bis zu 6, vorzugsweise mit bis zu 4 Kohlenstoffatomen stehen oder zusammen eine gegebenenfalls durch Sauerstoff unterbrochene Alkylengruppe mit 4 oder 5 Kohlenstoffatomen bilden, wie Dimethylamino, Diethylamino, Methylethylamino, Di-n-propyl-amino, Di-iso-propylamino, Di-n-butylamino, n-Butyl-ethyl-amino, Di-n-pentylamino, Di-n-hexylamino, Morpholinyl, Piperidinyl, Pyrrolidinyl.

Y bedeutet Sauerstoff, Schwefel oder einen Rest der Formel $-NR^5-$, wobei $R^5$ für einen Alkylrest mit bis zu 6 Kohlenstoffatomen, wie Methyl, Ethyl, n-Propyl, Isopropyl, n-Butyl, 3-Methyl-n-butyl, n-Pentyl, n-Hexyl, steht.

$R^2$ kann zusammen mit dem Kohlenstoff, dessen Substituent $R^2$ ist, und mit X einen fünf- oder sechsgliedrigen aromatischen Ring bilden, beispielsweise einen Benzol- oder Pyrrolring. Bevorzugt ist der Benzolring.

Gegenstand der Erfindung ist weiterhin ein Verfahren zur Herstellung der Isatogenderivate der Formel I durch Umsetzung von Oximinophenylglyoxalen der Formel

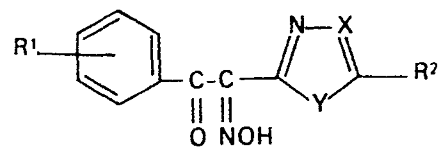

(II)

in der

$R^1$, $R^2$, X und Y die obengenannten Bedeutungen haben, mit Salzen der salpetrigen Säure in Gegenwart von Mineralsäure bei einer Temperatur im Bereich zwischen 0 und 120°C.

Isatogenderivate werden üblicherweise durch Cyclisierung der schwer zugänglichen 2-Nitrophenylacetylene hergestellt. Eine weitere Synthesemöglichkeit ist die Oxidation von Indolinen. Von Nachteil bei diesen Synthesewegen ist, dass die Ausgangsprodukte nur schwer zugänglich sind (Advances in Heterocyclic Chemistry 22, 123 ff (1978)).

Nach dem erfindungsgemässen Verfahren lassen sich Isatogenderivate der Formel I in guter Ausbeute und Reinheit herstellen. Die als Ausgangsstoffe verwendeten Oximinophenylglyoxale der Formel II sind leicht zugänglich (J. Heterocycl. Chem. 10, 899 (1973).

Das erfindungsgemässe Verfahren kann am Beispiel von 2-(1-Methyl-5-nitro-imidazol-2-yl)-isatogen durch das folgende Reaktionsschema wiedergegeben werden:

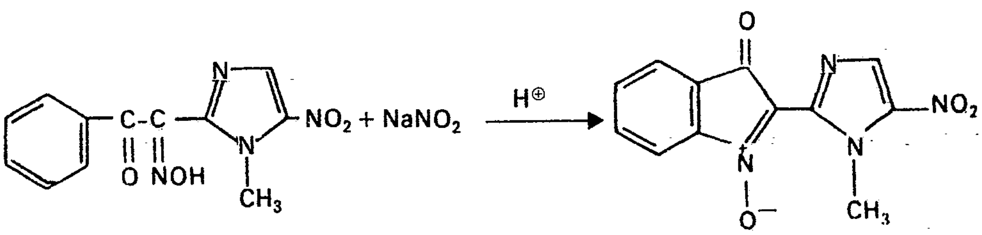

Die Umsetzung wird in der Regel bei einer Temperatur im Bereich zwischen 0 und 120°C, vorzugsweise zwischen 50 und 90°C, drucklos oder unter Druck, kontinuierlich oder diskontinuierlich durchgeführt. Üblicherweise wird der Ausgangsstoff der Formel II in der als Reaktionsmedium dienenden Mineralsäure vorgelegt und durch portionsweise Zugabe von Nitrit zur Reaktion gebracht. Es kann auch vorteilhaft sein, Ausgangsstoff II und Natriumnitrit als Gemisch portionsweise in die Mineralsäure einzutragen.

Als Mineralsäuren können Schwefelsäure, Salzsäure, Salpetersäure oder Phosphorsäure eingesetzt werden; vorzugsweise findet Phosphorsäure Verwendung. Die Mineralsäure wird dabei in einer Konzentration von 50 bis 100, vorzugsweise 60 bis 90%, eingesetzt. Bei Verwendung von Schwefelsäure oder Salpetersäure arbeitet man zweckmässigerweise mit maximal 50%iger Säure, um Nebenreaktionen auszuschliessen. Das Verhältnis Ausgangsstoff der Formel II: Säure beträgt 5 bis 50, vorzugsweise 10 bis 30 Gew.-Teile Oximinophenylglyoxal: 100 Gew.-Teilen Säure der obengenannten Konzentration.

Als Nitrite kommen Alkalimetallnitrite, wie Natriumnitrit oder Kaliumnitrit, in Betracht. Die Menge an Nitrit beträgt zweckmässigerweise 1 bis 3 Mol, bezogen auf 1 Mol Ausgangsstoff der Formel II.

Nach beendeter Reaktion kann das Isatogenderivat der Formel I durch Zugabe von Eiswasser ausgefällt und abgesaugt werden. Das so erhaltene Produkt kann durch Umkristallisation aus einem geeigneten Lösungsmittel weiter gereinigt werden.

Die folgenden Beispiele erläutern die Herstellung der Isatogenderivate der Formel I nach dem erfindungsgemässen Verfahren. Gewichtsteile verhalten sich zu Volumenteilen wie kg zu l.

Beispiel 1
2-(1-Methyl-5-nitroimidazol-2-yl)-isatogen

27,4 Gew.-Teile 1-Oximino-1-(1-methyl-5-nitroimidazol-2-yl)-2-phenylglyoxal und 7 Gew.-Teile Natriumnitrit werden gut vermischt und innerhalb von 20 Minuten in 125 Volumenteile 85%ige Phosphorsäure eingetragen und anschliessend 30 Minuten bei 80°C gerührt. Nach dem Abkühlen wird das Reaktionsgemisch auf Eiswasser gegeben, abgesaugt und mit Wasser gewaschen. Nach dem Trocknen unter vermindertem Druck erhält man 17,6 Gew.-Teile (65% d.Th.) orangerote Kristalle, die zur weiteren Reinigung aus Ethanol umkristallisiert werden können; Schmp. 216°C.

$C_{12}H_8N_4O_4$ (272)
Ber.: C 52,9 H 2,9 N 20,6 O 23,5
Gef.: C 51,8 H 3,0 N 20,7 O 24,0

Beispiel 2
2-(5-Methyl-1,3,4-thiadiazol-2-yl)-isatogen

Eine Mischung aus 24,7 Gew.-Teilen 1-Oximino-1-(5-methyl-1,3,4-thiadiazol-2-yl)-2-phenylglyoxal und 9 Gew.-Teilen Natriumnitrit wird bei 25°C innerhalb von 20 Minuten in 100 Volumenteile 85%ige Phosphorsäure eingebracht. Nach einstündigem Rühren bei 90°C wird die Mischung gekühlt, auf Eiswasser gegeben und abgesaugt. Man erhält 18 Gew.-Teile (76% d.Th.) rotbraunes Kristallisat, das aus Dimethylformamid umkristallisiert werden kann; Schmp. 252°C.

$C_{11}H_7N_3O_2S$ (245)
Ber.: C 53,9 H 2,9 N 17,1 O 13,6 S 13,9
Gef.: C 53,0 H 2,8 N 17,6 O 13,6 S 13,3

Beispiel 3
2-(1,3-Benzthiazol-2-yl)-isatogen

Eine Mischung aus 14,1 Gew.-Teilen 1-Oximino-1-(1,3-benzthiazol-2-yl)-2-phenylglyoxal und 3,5 Teilen Natriumnitrit gibt man bei 20°C innerhalb von 15 Minuten in 100 Volumenteile 85%ige Phosphorsäure. Nach vierstündigem Rühren bei 50°C wird gekühlt, von nicht gelöstem Anteil dekantiert und auf Eiswasser gegeben. Der dunkelrote Niederschlag wird abgesaugt, mit Wasser und Methanol gewaschen. Ausbeute 9,5 Gew.-Teile (68% d.Th.). Zur weiteren Reinigung kann aus Methylglykol umkristallisiert werden; Schmp. 250°C.

$C_{15}H_8N_2O_2S$ (280)
Ber.: C 64,3 H 2,9 N 10,0 O 11,4 S 11,4
Gef.: C 63,6 H 3,2 N 10,3 O 11,0 S 11,6

Analog lassen sich beispielsweise folgende Verbindungen der Formel I herstellen:

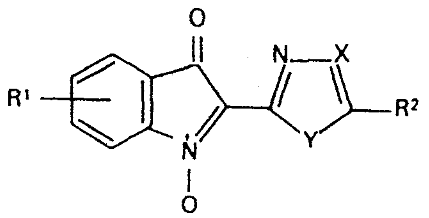

| Nr. | R[1] | R[2] | X | Y |
|---|---|---|---|---|
| 3 | H | H | N | S |
| 4 | $CH_3$ | $CH_3$ | N | S |
| 5 | F | $CH_3$ | N | S |
| 6 | Cl | $CH_3$ | N | S |
| 7 | Br | $CH_3$ | N | S |
| 8 | $OCH_3$ | $CH_3$ | N | S |
| 9 | H | 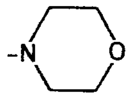 | N | S |
| 10 | H | 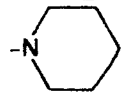 | N | S |
| 11 | H | 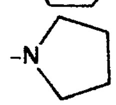 | N | S |
| 12 | $OCH_3$ | H | N | $-N(CH_3)-$ |
| 13 | F | $CH_3$ | N | $-(NCH_3)-$ |
| 14 | H | H | N | $-N(CH_3)-$ |
| 15 | H | $NO_2$ | CH | S |
| 16 | $OCH_3$ | $NO_2$ | CH | S |
| 17 | Cl | $NO_2$ | CH | S |

Die Isatogenderivate der Formel I besitzen eine sehr gute fungitoxische Wirksamkeit gegenüber Schadpilzen, die im Pflanzenschutz wirtschaftlich bedeutend sind. Sie sind beispielsweise sehr gut geeignet zur Bekämpfung von Septoria nodorum und Septoria tritici an Weizen. Die dabei verwendbaren fungiziden Mittel erhalten 0,1 bis 95 Gew.-Prozent Wirkstoff, vorzugsweise 0,5 bis 90 Gew.%. Die Aufwandmengen liegen je nach Art des gewünschten Effektes zwischen 0,05 und 3 kg oder mehr, vorzugsweise jedoch zwischen 0,5 und 1 kg Wirkstoff/ha.

Die Mittel werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die Mittel werden beispielsweise in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet. Die Anwendungsformen richten sich ganz nach den Verwendungszwecken; sie sollten in jedem Fall möglichst die feinste Verteilung der Wirkstoffmischungen gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wässrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Silicagel, Kieselsäuren, Silikate, Talkum, Kaolin, Kalkstein, Kalk, Kreide, Talkum, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden- Holz- und Nussschalenmehl, Cellulosepulver und andere feste Trägerstoffe.

Beispiele für Formulierungen sind:

I. Man vermischt 90 Gewichtsteile der Verbindung gemäss Beispiel 1 mit 10 Gewichtsteilen N-Methyl-α-pyrrolidon und erhält eine Lösung, die zur Anwendung in Form kleinster Tropfen geeignet ist.

II. 10 Gewichsteile der Verbindung gemäss Beispiel 3 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht. Durch Ausgiessen und feines Verteilen der Lösung in Wasser erhält man eine wässrige Dispersion.

III. 20 Gewichtsteile der Verbindung gemäss Beispiel 3 werden in einer Mischung gelöst, die aus 640 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht. Durch Eingiessen und feines Verteilen der Lösung in Wasser erhält man eine wässrige Dispersion.

IV. 20 Gewichtsteile der Verbindung gemäss Beispiel 2 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingiessen und feines Verteilen der Lösung in Wasser erhält man eine wässrige Dispersion.

V. 80 Gewichtsteile der Verbindung gemäss Beispiel 1 werden mit 3 Gewichtsteilen des Natriumsalzes der Diisobutylnaphthalin-sulfonsäure, 10 Gewichtsteilen des Natriumsalzes einer Ligninsulfonsäure aus einer Sulfit-Ablauge und 70 Gewichtsteilen pulverförmigem Kieselsäuregel gut vermischt und in einer Hammermühle vermahlen. Durch feines Verteilen der Mischung in Wasser erhält man eine Spritzbrühe.

VI. 5 Gewichtsteile der Verbindung gemäss Beispiel 2 werden mit 95 Gewichtsteilen feinteiligem Kaolin innig vermischt. Man erhält auf diese Weise ein Stäubemittel, das 5 Gew.% des Wirkstoffs enthält.

VII. 30 Gewichtsteile der Verbindung gemäss Beispiel 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gewichtsteile der Verbindung gemäss Beispiel 2 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wässrige Dispersion. Durch Verdünnen mit Wasser erhält man eine verdünnte wässrige Dispersion.

IX. 20 Teile der Verbindung gemäss Beispiel 3 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

Die Wirkstoffe können auch mit anderen bekannten Fungiziden gemischt werden. In vielen Fällen erhält man dabei eine Vergrösserung des fungiziden Wirkungsspektrums; bei einer Anzahl dieser Fungizidmischungen treten synergistische Effekte auf, d.h. die fungizide Wirksamkeit des Kombinationsproduktes ist grösser als die der additiven Wirksamkeit der Einzelkomponenten.

Fungizide, die mit den erfindungsgemässen Isatogenderivaten kombiniert werden können, sind beispielsweise:

Ferridimethyldithiocarbamat,
Zinkdimethyldithiocarbamat,
Manganäthylenbisdithiocarbamat,
Mangan-zink-äthylendiamin-bis-dithiocarbamat,
Zinkäthylenbisdithiocarbamat,
Tetramethylthiuramdisulfid,
3,5-Dimetyhl-1,3,5-2H-tetrahydrothiadiazin-2-thion,
Ammoniak-Komplex von Zink-(N,N'-äthylen)-bis-dithiocarbamat und N,N'-Polyäthylen-bis-(thiocarbamoyl)-disulfid,
Zink-(N,N'-propylen)-bis-dithiocarbamat,
Ammoniak-Komplex von Zink-(N,N'-propylen-bis-dithiocarbamat) und N,N'-Polypropylen-bis-(thiocarbamoyl)-disulfid;
Dinitro-(1-methylheptyl)-phenyl-crotonat,
2-sec.-Butyl-4,6-dinitrophenyl-3,3-dimethylacrylat,
2-sec.-Butyl-4,6-dinitrophenylisopropylcarbonat,
2,4,5-Trichlorphenol,
Pentachlorphenol,
Barium-Salz von Pentachlorphenol,
Pentachlorphenol-acetat,
Pentachlorbenzylalkohol,
Di-(5-chloro-2-hydroxyphenyl)-methan,
Phenyl-(5-chloro-2-hydroxyphenyl)-methan,
N-Trichlormethylthio-tetrahydrophthalamid,
N-Trichlormethylthio-phthalimid,
N-Fluordichlormethylthio-phthalimid,
N-(1,1,2,2-Tetrachloräthylthio)-tetrahydrophthalimid,
2-Heptadecyl-2-imidazolinacetat,
2,4-Dichlor-6-(o-chloranilino)-s-triazin,
Diäthylphthalimidophosphorothioat,
5-Amino-1-[bis-(dimethylamino)-phosphinyl]-3-phenyl-1,2,4-triazol,
5-Äthoxy-3-trichlormethyl-1,2,4-thiadiazol,
2,3-Dicyano-1,4-dithioanthrachinon,
Chinoxalin-2,3-cycl.-trithocarbonat,
1-(Butylcarbamoyl)-2-benzimidazol-carbaminsäuremethylester,
2-Methoxycarbonylamino-benzimidazol,

2-Rhodanmethylthio-benzthiazol,
4-(2-Chlorphenylhydrazono)-3-methyl-5-isoxazolon,
1-(1,2,4-Triazolyl-1′)-[1-(4′-chlorphenoxy)]-3,3-dimethyl-butan-2-on,
1-(1-Imidazoyl)-2-allyloxy-2-(2,4-dichlorophenyl)-äthan,
2-(0,0-Diäthyl-thionophosphoryl)-5-methyl-6-carbäthoxy-pyrazol-(1,5a)-pyrimidin,
Pyridin-2-thiol-1-oxid,
8-Hydroxychinolin bzw. dessen Kupfer-Salz,
5,5-Dimethyl-3-(3,5-dichlorphenyl)-2,4-dioxo-1,3-oxazolidin,
5-Methyl-5-vinyl-3-(3,5-dichlorphenyl)-2,4-dioxo-1,3-oxazolidin,
2-[Furyl-(2)]-benzimidazol,
Piperazin-1,4-diyl-bis-1-(2,2,2-Trichloräthyl)-formamid,
2-[Thiazolyl-(4)]-benzimidazol,
5-Butyl-2-dimethylamino-4-hydroxy-6-methyl-pyrimidin,
Bis-(p-chlorphenyl)-3-pyridinmethanol,
1,2-Bis-(3-äthoxycarbonyl-2-thioureido)-benzol,
1,2-Bis-(3-methoxycarbonyl-1-thioureido)-benzol,
Dodecylguanidinacetat,
3-[2-(3,5-Dimethyl-2-oxycyclohexyl)-2-hydroxyäthyl]-glutarimid,
Hexachlorbenzol,
N-Dichlorfluormethylthio-N′,
N′-dimethyl-N-phenyl-schwefelsäurediamid,
N-Dichlorfluormethylthio-N-methyl-N′-methyl-N′-phenyl-schwefelsäurediamid,
2,4,5,6-Tetrachlor-isophthalonitril,
1-(3,4-Dichloranilino)-1-formylamino-2,2,2-trichloräthan,
2,6-Dimethyl-N-tridecyl-morpholin bzw. dessen Salze,
2,6-Dimethyl-N-cyclododecyl-morpholin bzw. dessen Salze,
2,3-Dichlor-1,4-naphthochinon,
1,4-Dichlor-2,5-dimethoxybenzol,
p-Dimethylaminobenzol-diazonatriumsulfonat,
2-Chlor-1-nitro-propan,
Polychlornitrobenzole wie Pentachlornitrobenzol,
Methylisothiocyanat,
Triphenyl-zinn-acetat,
fungizide Antibiotika wie Griseofulvin oder Kasugamycin,
Tetrafluordichloraceton,
1-Phenylthiosemicarbazid,
Aluminiumkomplex des N′-Hydroxy-N-cyclohexyl-diaszeniumoxids,
Bordeauxmischung,
nickelhaltige Verbindungen und Schwefel,
Mercaptobenzthiazol,
Methyl-N-(2,6-dimethyl)-N-(2-furoyl)-alaninat,
Methyl-N-(2,6-dimethyl)-N-(2-methoxyacetyl)-alaninat,
2-Cyano-N-[(äthylamino)carbonyl]-2-(methoximino)-acetamid,
β-(4-Chlorphenoxy)-(1,1-dimethyl-1H-1,2,4-triazol-1-äthanol,
Benzisothiazolon.

Diese Mittel können zu den erfindungsgemässen Fungiziden im Gewichtsverhältnis 1:10 bis 10:1 zugemischt werden. Sie können gegebenenfalls auch erst unmittelbar vor der Anwendung (Tankmischung) zugesetzt werden.

Fungizide Wirkung gegen Septoria nodorum an Weizen. Blätter von in Töpfen gewachsenen Weizenpflanzen der Sorte «Jubilar» werden mit wässrigen Spritzbrühen, die 0,1 Gew.% Wirkstoff emulgiert enthalten, tropfnass gespritzt. Nach dem Antrocknen des Spritzbelages werden die Pflanzen mit einer Sporenaufschwemmung des Pilzes Septoria nodorum besprüht und bei 16 bis 18°C in eine Kammer mit hoher Luftfeuchtigkeit gestellt, um optimale Bedingungen für die Pilzentwicklung zu erhalten. Nach 14 Tagen hat sich die Krankheit auf den unbehandelten Kontrollpflanzen so stark entwickelt, dass die entstandenen Blattflecken den überwiegenden Teil der Blätter bedecken.

In diesem Test zeigen die Wirkstoffe gemäss Beispiel 1 und 2 eine stärkere fungizide Wirkung als das Vergleichsmittel 2,4,5,6-Tetrachlor-isophthalo-dinitril (FR-PS 1 397 521).

**Patentansprüche**

für die Vertragsstaaten: CH, DE, FR, GB, LI

1. Isatogenderivate der Formel

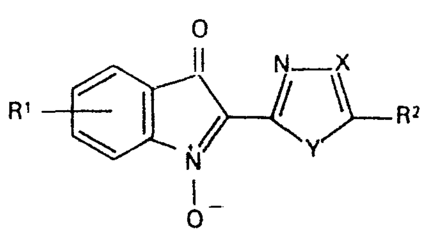

(I),

in der
$R^1$ Wasserstoff, Halogen oder einen Alkyl- oder Alkoxyrest mit bis zu 6 Kohlenstoffatomen,
$R^2$ Wasserstoff, Nitro, einen Alkylrest mit bis zu 6 Kohlenstoffatomen oder einen Rest der Formel

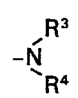

,in der $R^3$ und $R^4$ gleich oder verschieden sind und für Alkyl mit bis zu 6 Kohlenstoffatomen stehen oder zusammen eine gegebenenfalls durch Sauerstoff unterbrochene Alkylengruppe mit 4 oder 5 Kohlenstoffatomen bilden,
X Kohlenstoff oder Stickstoff und
Y Sauerstoff, Schwefel oder einen Rest der Formel $-NR^5-$, wobei $R^5$ für Alkyl mit bis zu 6 Kohlenstoffatomen steht, bedeuten oder
$R^2$ zusammen mit dem Kohlenstoff, dessen Substituent $R^2$ ist, und mit X einen fünf- oder sechsgliedrigen aromatischen Ring bildet.

2. 2-(1-Methyl-5-nitroimidazol-2-yl)-isatogen.

3. 2-(5-Methyl-1,3,4-thiadiazol-2-yl)-isatogen.

4. Verfahren zur Herstellung von Isatogenderivaten der Formel I gemäss Anspruch 1, dadurch gekennzeichnet, dass man ein Oximinophenylglyoxal der Formel

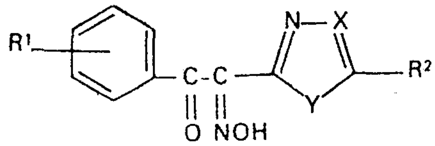

(II)

in der
$R^1$, $R^2$, X und Y die im Anspruch 1 genannten Bedeutungen haben, mit Salzen der salpetrigen Säure in Gegenwart von Mineralsäure umsetzt.

5. Fungizides Mittel, enthaltend inerte Zusatzstoffe und ein Isatogenderivat der Formel I gemäss Anspruch 1.

6. Verfahren zur Bekämpfung von Pilzen, dadurch gekennzeichnet, dass man ein Isatogenderivat der Formel I gemäss Anspruch 1 auf diese bzw. auf durch Pilzbefall bedrohte Flächen, Pflanzen oder Saatgüter einwirken lässt.

**Patentansprüche**
für den Vertragsstaat: AT

1. Fungizides Mittel, enthaltend inerte Zusatzstoffe und ein Isatogenderivat der Formel

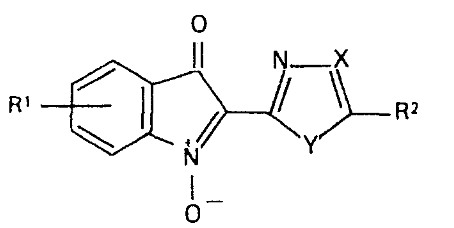

(I),

in der
$R^1$ Wasserstoff, Halogen oder einen Alkyl- oder Alkoxyrest mit bis zu 6 Kohlenstoffatomen,
$R^2$ Wasserstoff, Nitro, einen Alkylrest mit bis zu 6 Kohlenstoffatomen oder einen Rest der Formel

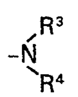 , in der $R^3$ und $R^4$ gleich oder verschieden sind und für Alkyl mit bis zu 6 Kohlenstoffatomen stehen oder zusammen eine gegebenenfalls durch Sauerstoff unterbrochene Alkylengruppe mit 4 oder 5 Kohlenstoffatomen bilden,
X Kohlenstoff oder Stickstoff und
Y Sauerstoff, Schwefel oder einen Rest der Formel $-NR^5-$, wobei $R^5$ für Alkyl mit bis zu 6 Kohlenstoffatomen steht, bedeuten oder
$R^2$ zusammen mit dem Kohlenstoff, dessen Substituent $R^2$ ist, und mit X einen fünf- oder sechsgliedrigen aromatischen Ring bildet.

2. Fungizides Mittel, enthaltend inerte Zusatzstoffe und 2-(1-Methyl-5-nitroimidazol-2-yl)-isatogen.

3. Fungizides Mittel, enthaltend inerte Zusatzstoffe und 2-(5-Methyl-1,3,4-thiadiazol-2-yl)-isatogen.

4. Verfahren zur Herstellung von Isatogenderivaten der Formel I gemäss Anspruch 1, dadurch gekennzeichnet, dass man ein Oximinophenylglyoxal der Formel

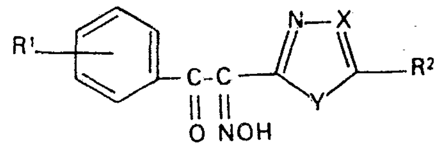

(II)

in der
$R^1$, $R^2$, X und Y die im Anspruch 1 genannten Bedeutungen haben, mit Salzen der salpetrigen Säure in Gegenwart von Mineralsäure umsetzt.

5. Verfahren zur Bekämpfung von Pilzen, dadurch gekennzeichnet, dass man eine fungizid wirksame Menge eines fungiziden Mittels gemäss Anspruch 1 auf diese bzw. auf durch Pilzbefall bedrohte Flächen, Pflanzen oder Saatgüter einwirken lässt.

**Claims**
for the Contracting states: CH, DE, FR, GB, LI

1. An isatogen derivative of the formula

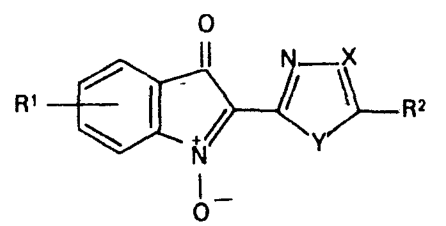

(I),

where
$R^1$ is hydrogen, halogen or alkyl or alkoxy of up to 6 carbon atoms,
$R^2$ is hydrogen, nitro, alkyl of up to 6 carbon atoms or a radical of the formula

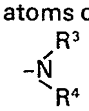 , where $R^3$ and $R^4$ are identical or different and are each alkyl of up to 6 carbon atoms or together form an alkylene group of 4 or 5 carbon atoms which may or may not be interrupted by oxygen,
X is carbon or nitrogen,
Y is oxygen, sulphur or a radical of the formula $-NR^5-$, where $R^5$ is alkyl of up to 6 carbon atoms, or
$R^2$ together with the carbon, whose substituent $R^2$ is, and with X forms a five- or six-membered aromatic ring.

2. 2-(1-Methyl-5-nitroimidazol-2-yl)-isatogen.

3. 2-(5-Methyl-1,3,4-thiadiazol-2-yl)-isatogen.

4. A process for the preparation of an isatogen derivative of the formula I as claimed in claim 1, wherein an oximinophenylglyoxal of the formula

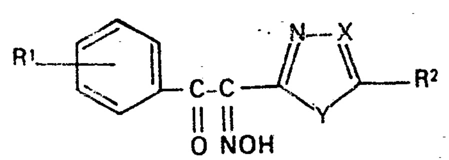

(II)

where

$R^1$, $R^2$, X and Y have the meanings given in claim 1, is reacted with a salt of nitrous acid in the presence of a mineral acid.

5. A fungicidal agent containing inert additives and an isatogen derivative of the formula I as claimed in claim 1.

6. A method of combating fungi, wherein an isatogen derivative of the formula I as claimed in claim 1 is allowed to act on them or on surfaces, plants or seeds threatened by fungal attack.

**Revendications**
pour les Etats contractants: CH, DE, FR, GB, LI

1. Dérivés d'isatogène de formule

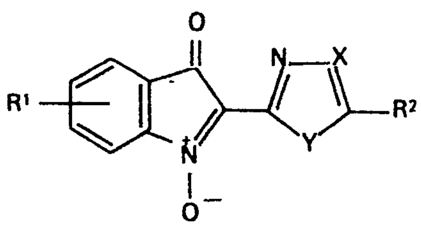

(I),

dans laquelle
$R^1$ représente hydrogène, halogène ou un reste alkyle ou alcoxy ayant jusqu'à 6 atomes de carbone,
$R^2$ hydrogène, nitro, un reste alkyle ayant jusqu'à 6 atomes de carbone ou un reste de formule

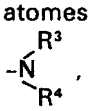
,

dans laquelle $R^3$ et $R^4$ sont identiques ou différents et représentent alkyle ayant jusqu'à 6 atomes de carbone ou forment, ensemble, un groupe alkylène à 4 ou 5 atomes de carbone, éventuellement interrompu par de l'oxygène,
X carbone ou azote et
Y oxygène, soufre ou un reste de formule $-NR^5-$, $R^5$ représentant alkyle ayant jusqu'à 6 atomes de carbone, ou
$R^2$ forme, avec le carbone dont le substituant est $R^2$ et avec X, un noyau aromatique à cinq ou six chaînons.

2. 2-(1-méthyl-5-nitroimidazol-2-yl)-isatogène.

3. 2-(5-méthyl-1,3,4-thiadiazol-2-yl)-isatogène.

4. Procédé de préparation de dérivés d'isatogène de formule I, selon la revendication 1, caractérisé par le fait qu'on fait réagir un oximinophénylglyoxal de formule

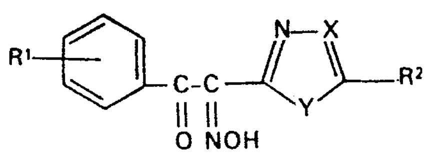

(II)

dans laquelle
$R^1$, $R^2$, X et Y ont les significations indiquées dans la revendication 1, avec des sels d'acide nitreux en présence d'acide minéral.

5. Fongicide contenant des additifs inertes et un dérivé d'isatogène de formule I selon la revendication 1.

6. Procédé de lutte contre les champignons, caractérisé par le fait qu'on fait agir un dérivé d'isatogène de formule I selon la revendication 1 sur ces champignons ou sur les surfaces, plantes ou semences attaquées par ceux-ci.

**Claims**
for the Contracting state: AT

1. A fungicidal agent containing inert additives and an isatogen derivative of the formula

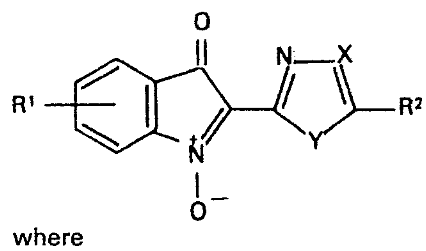

(I),

where
$R^1$ is hydrogen, halogen or alkyl or alkoxy of up to 6 carbon atoms,
$R^2$ is hydrogen, nitro, alkyl of up to 6 carbon atoms or a radical of the formula

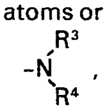
,

where $R^3$ and $R^4$ are identical or different and are each alkyl of up to 6 carbon atoms or together form an alkylene group of 4 or 5 carbon atoms which may or may not be interrupted by oxygen,
X is carbon or nitrogen,
Y is oxygen, sulphur or a radical of the formula $-NR^5-$, where $R^5$ is alkyl of up to 6 carbon atoms, or
$R^2$ together with the carbon, whose substituent $R^2$ is, and with X forms a five- or six-membered aromatic ring.

2. A fungicidal agent containing inert additives and 2-(1-methyl-5-nitroimidazol-2-yl)-isatogen.

3. A fungicidal agent containing inert additives and 2-(5-methyl-1,3,4-thiadiazol-2-yl)-isatogen.

4. A process for the preparation of an isatogen derivative of the formula I according to claim 1, wherein an oxominophenylglyoxal of the formula

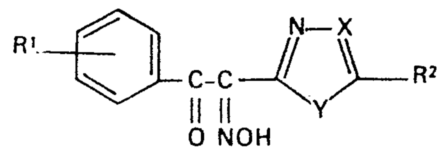

(II)

where
$R^1$, $R^2$, X and Y have the meanings given in claim 1, is reacted with a salt of nitrous acid in the presence of a mineral acid.

5. A method of combating fungi, wherein a fungicidally effective amount of a fungicidal agent as claimed in claim 1 is allowed to act on them or on surfaces, plants or seeds threatened by fungal attack.

$R^1$, $R^2$, X and Y have the meanings given in claim 1, is reacted with a salt of nitrous acid in the presence of a mineral acid.

5. A fungicidal agent containing inert additives and an isatogen derivative of the formula I as claimed in claim 1.

6. A method of combating fungi, wherein an isatogen derivative of the formula I as claimed in claim 1 is allowed to act on them or on surfaces, plants or seeds threatened by fungal attack.

**Revendications**
pour les Etats contractants: CH, DE, FR, GB, LI

1. Dérivés d'isatogène de formule

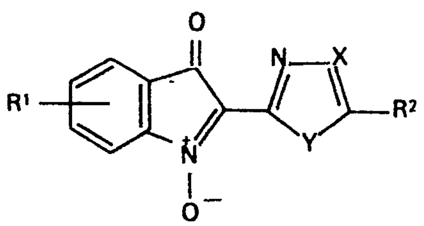

(I),

dans laquelle
$R^1$ représente hydrogène, halogène ou un reste alkyle ou alcoxy ayant jusqu'à 6 atomes de carbone,
$R^2$ hydrogène, nitro, un reste alkyle ayant jusqu'à 6 atomes de carbone ou un reste de formule

$$-N\begin{matrix}R^3\\R^4\end{matrix}\ ,$$

dans laquelle $R^3$ et $R^4$ sont identiques ou différents et représentent alkyle ayant jusqu'à 6 atomes de carbone ou forment, ensemble, un groupe alkylène à 4 ou 5 atomes de carbone, éventuellement interrompu par de l'oxygène,
X carbone ou azote et
Y oxygène, soufre ou un reste de formule $-NR^5-$, $R^5$ représentant alkyle ayant jusqu'à 6 atomes de carbone, ou
$R^2$ forme, avec le carbone dont le substituant est $R^2$ et avec X, un noyau aromatique à cinq ou six chaînons.

2. 2-(1-méthyl-5-nitroimidazol-2-yl)-isatogène.

3. 2-(5-méthyl-1,3,4-thiadiazol-2-yl)-isatogène.

4. Procédé de préparation de dérivés d'isatogène de formule I, selon la revendication 1, caractérisé par le fait qu'on fait réagir un oximinophénylglyoxal de formule

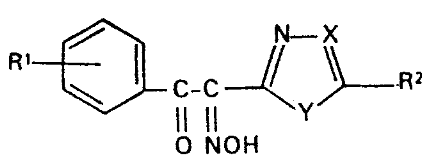

(II)

dans laquelle
$R^1$, $R^2$, X et Y ont les significations indiquées dans la revendication 1, avec des sels d'acide nitreux en présence d'acide minéral.

5. Fongicide contenant des additifs inertes et un dérivé d'isatogène de formule I selon la revendication 1.

6. Procédé de lutte contre les champignons, caractérisé par le fait qu'on fait agir un dérivé d'isatogène de formule I selon la revendication 1 sur ces champignons ou sur les surfaces, plantes ou semences attaquées par ceux-ci.

**Claims**
for the Contracting state: AT

1. A fungicidal agent containing inert additives and an isatogen derivative of the formula

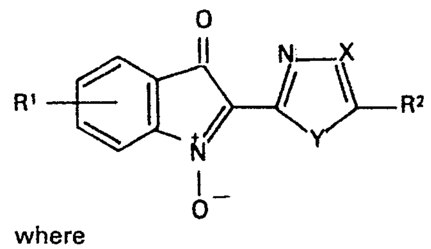

(I),

where
$R^1$ is hydrogen, halogen or alkyl or alkoxy of up to 6 carbon atoms,
$R^2$ is hydrogen, nitro, alkyl of up to 6 carbon atoms or a radical of the formula

$$-N\begin{matrix}R^3\\R^4\end{matrix}\ ,$$

where $R^3$ and $R^4$ are identical or different and are each alkyl of up to 6 carbon atoms or together form an alkylene group of 4 or 5 carbon atoms which may or may not be interrupted by oxygen,
X is carbon or nitrogen,
Y is oxygen, sulphur or a radical of the formula $-NR^5-$, where $R^5$ is alkyl of up to 6 carbon atoms, or
$R^2$ together with the carbon, whose substituent $R^2$ is, and with X forms a five- or six-membered aromatic ring.

2. A fungicidal agent containing inert additives and 2-(1-methyl-5-nitroimidazol-2-yl)-isatogen.

3. A fungicidal agent containing inert additives and 2-(5-methyl-1,3,4-thiadiazol-2-yl)-isatogen.

4. A process for the preparation of an isatogen derivative of the formula I according to claim 1, wherein an oxominophenylglyoxal of the formula

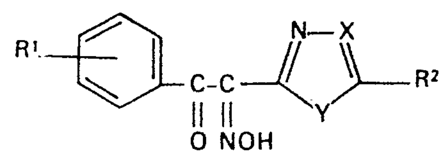

(II)

where
$R^1$, $R^2$, X and Y have the meanings given in claim 1, is reacted with a salt of nitrous acid in the presence of a mineral acid.

5. A method of combating fungi, wherein a fungicidally effective amount of a fungicidal agent as claimed in claim 1 is allowed to act on them or on surfaces, plants or seeds threatened by fungal attack.

**Revendications**
pour l'Etat contractant: AT

1. Fongicide contenant des additifs inertes et un dérivé d'isatogène de formule

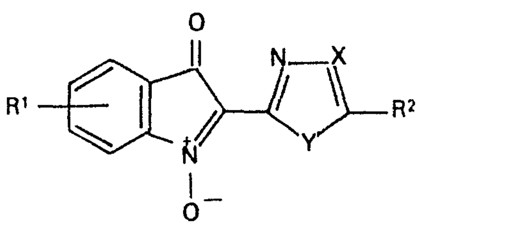

(I),

dans laquelle
$R^1$ représente hydrogène, halogène ou un reste alkyle ou alcoxy ayant jusqu'à 6 atomes de carbone,
$R^2$ hydrogène, nitro, un reste alkyle ayant jusqu'à 6 atomes de carbone ou un reste de formule

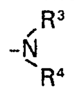

,

dans laquelle $R^3$ et $R^4$ sont identiques ou différents et représentent alkyle ayant jusqu'à 6 atomes de carbone ou forment, ensemble, un groupe alkylène à 4 ou 5 atomes de carbone, éventuellement interrompu par de l'oxygène,
X carbone ou azote et
Y oxygène, soufre ou un reste de formule $-NR^5-$, $R^5$ représentant alkyle ayant jusqu'à 6 atomes de carbone, ou
$R^2$ forme, avec le carbone dont le constituant est $R^2$ et avec X, un noyau aromatique à cinq ou six chaînons.

2. Fongicide contenant des additifs inertes et du 2-(1-méthyl-5-nitroimidazol-2-yl)-isatogène.

3. Fongicide contenant des additifs inertes et du 2-(5-méthyl-1,3,4-thiadiazol-2-yl)-isatogène.

4. Procédé de préparation de dérivés d'isatogène de formule I, selon la revendication 1, caractérisé par le fait qu'on fait réagir un oximinophénylglyoxal de formule

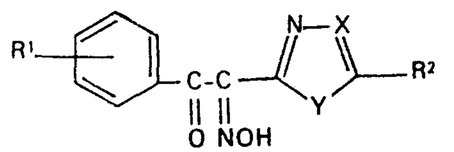

(II)

dans laquelle
$R^1$, $R^2$, X et Y ont les significations indiquées dans la revendication 1,
avec des sels d'acide nitreux en présence d'acide minéral.

5. Procédé de lutte contre les champignons, caractérisé par le fait qu'on fait agir une quantité efficace au point de vue fongicide d'un fongicide selon la revendication 1, sur ces champignons ou sur les surfaces, plantes ou semances attaquées par ceux-ci.